Europäisches Patentamt

European Patent Office

Office européen des brevets

(19)

(11) Publication number: **0 345 465**

**A1**

(12) # EUROPEAN PATENT APPLICATION

(21) Application number: **89108009.5**

(22) Date of filing: **03.05.89**

(51) Int. Cl.⁴: **H01M 2/16 , H01M 6/06**

(30) Priority: **07.06.88 US 203702**

(43) Date of publication of application:
**13.12.89 Bulletin 89/50**

(84) Designated Contracting States:
**DE FR GB**

(71) Applicant: **RAYOVAC CORPORATION**
**601 Rayovac Drive**
**Madison Wisconsin 53711(US)**

(72) Inventor: **Bergum, Bernard C.**
**5628 Lake Mendota Drive**
**Madison Wisconsin 53705(US)**
Inventor: **Dunham, Thomas T.**
**Route 3**
**Dodgevillel Wisconsin 53533(US)**
Inventor: **Spellman, Patrick J.**
**2475 Branch Street**
**Middleton Wisconsin 53562(US)**

(74) Representative: **Behrens, Dieter, Dr.-Ing. et al**
**Wuesthoff & Wuesthoff Patent- und**
**Rechtsanwälte Schweigerstrasse 2**
**D-8000 München 90(DE)**

(54) **Primary alkaline electrochemical cells and batteries.**

(57) A primary alkaline electrochemical cell containing cathodic materials insoluble in alkaline electrolyte which exhibits increased cell performance at low temperatures, yet does not exacerbate handling and processing problems during cell construction comprises a powdered metallic anode (e.g. zinc) having a aqueous alkaline electrolyte dispersed therein, a cathode (e.g. essentially of manganese dioxide) which is insoluble in said aqueous alkaline electrolyte, and a separator placed therebetween, wherein the separator forms an alkaline resistant non-porous barrier between said anode and said cathode. The separator may comprise two lyers of an absorbent porous separator material and a barrier type membrane placed therebetween, which preferably has a pore size of approximately 2,5 to 4,0 nm and allows for the transfer of electrolytic ions. The absorbent porous separator material absorbs at least 180 % of its weight of said alkaline electrolyte.

EP 0 345 465 A1

## PRIMARY ALKALINE ELECTROCHEMICAL CELLS AND BATTERIES

### FIELD OF THE INVENTION

Our invention relates to batteries comprising one or more primary alkaline electrochemical cells having cathodes which are not soluble in alkaline electrolyte, and more particularly relates to such primary alkaline electrochemical cells and batteries in which barrier membranes are incorporated within the separator system of such alkaline electrochemical cells. The primary alkaline cells and batteries of our invention exhibit significantly improved electrochemical performance at low temperature, without any substantial decrease in rate capability.

### BACKGROUND OF THE INVENTION

Primary alkaline electrochemical cells are well known sources of portable energy and are used in a multitude of applications. However, in some applications, most notably in low temperature applications, primary alkaline cells have not found widespread commercial acceptance, since they exhibit poor cell performance, including decreased cell capacity and rate capability. These deleterious effects upon cell performance may be due to the separator systems which are used in alkaline electrochemical cells.

Primary alkaline electrochemical cells are comprised of an anode, often consisting essentially of zinc, an alkaline electrolyte, most commonly aqueous solutions of potassium hydroxide or sodium hydroxide, and a positive cathodic material. It is well known to provide such cells with separators in order to keep the anode and cathode from physically contacting one another. However, such separators must allow for the transfer of ionic species in order for current to be produced within the cell.

Additionally, the cathodic material in some primary alkaline electrochemical systems react with the alkaline electrolyte to form soluble cathodic species. These soluble cathodic species, if allowed to react with the anode, form a metallic species which cause the cell to short out or self discharge during storage and use. In fact, if a metallic bridge is formed from the anode to the cathode, there can be a catastrophic failure of the cell. In order to prevent or at least lessen such detrimental effects upon the cell and its performance, primary alkaline electrochemical cells which contain solublizable cathodic materials employ barrier-type separators.

Barrier-type separators are typically semipermeable, alkaline resistant membranes. These barriers must impede the transfer of soluble cathodic species, but not electrolyte ions and water. Such barriers must be effectively non-porous, and typically the pores of such membranes are very small, on the order of between about 25 to 40 angstroms. While such barrier-type membrane separators eliminate, at least in part, the contact of soluble cathodic materials and the anode, their presence in the cells effects the performance of the cell. Primary alkaline electrochemical cells having solulizable cathodes, especially those having mercury oxide or silver oxide cathodes, exhibit marked decreases in high drain rate cell performance over experimental cells constructed without such barrier membranes. Both hypotheses and experimental results suggest that the addition of such barrier-type separators causes an increase in internal cell resistance, as well as decreased cell capacity at low temperature.

Because of the well documented problems associated with barrier-type separators which are either too permeable or not permeable enough, a great deal of effort has been expended in the search for an appropriate barrier-type separator for primary alkaline cells incorporating solulizable cathodes. For example, U.S. Patent No. 4,122,133, issued to Bernstein, et al. discloses a barrier-type separator comprised of a polyolefin having ethylenically unsaturated inorganic monomers grafted thereon. The grafted polymer is then fused with sulfur powder and exposed to ultraviolet light to promote cross-linking. The inventors claim such separators are less brittle and more easily fabricated than previously used barrier-type separators.

In U.S. Patent No. 4,230,549, assigned to RAI Research Corp., a method of producing polymer barrier-type membranes for primary alkaline electrochemical cells having solulizable cathodes by somewhat different radiation grafting techniques is disclosed. Again the object of the disclosed invention was to provide for a membrane that was resistant to oxidative degradation and hydrolytic attack, both of which can limit the life of the cell by permitting the solulizable cathodic material to contact the anode.

Similarly, U.S. Patent No. 4,283,442, assigned in part to the Japanese Atomic Energy Research Institute, discloses a method of producing a barrier-type separator for primary alkaline cells comprised of soluble cathodic material wherein the separator comprised of grafting an acrylic acid on to a polyethylene film, treating the resulting membrane with an aqueous alkaline solution, and drying the treated membrane under application of tension.

Primary alkaline electrochemical cells which contain non-solulizable cathodic materials, e g., alkaline electrochemical cells comprised of anodes comprised of zinc, alkaline electrolyte, typically potassium hydroxide or sodium hydroxide, and cathodes consisting essentially of manganese dioxide, have been commercially available since the early 1950's. Unlike most other primary alkaline electrochemical cells, especially those having mercury oxide or silver oxide cathodes, no soluble cathode species are produced upon the reaction of the alkaline electrolyte and manganese dioxide. Traditionally, such primary alkaline electrochemical cells have utilized a non-woven, highly absorbent separator material between the zinc anode and the manganese dioxide cathode. See, for example, the disclosure of an alkaline electrochemical cell given in U.S. Patent No. 2,650,945, issued to Herbert on September 1, 1953. At column 7, lines 32-44 of this patent, which is believed to be the first U.S. patent issued for an alkaline manganese dioxide electrochemical cell and which was assigned to the predecessor of our assignee, the required properties of the separator for such electrochemical cells are given: "a porous wafer ... formed of a high porous material capable of absorbing and holding electrolyte ... capable of acting as a resilient spacing member so as to insure the physical separation of the zinc anode [from the cathode] ... . The porous wafer should be highly resistant to chemical decomposition such as might be generated by an alkaline electrolyte." The absorption of electrolyte is known to moderate the increase in internal cell resistance which results from a restriction to the free-flow of ions due to the addition of the separator.

Since no soluble cathodic species are produced when manganese dioxide cathode material is placed in an alkaline environment, such primary alkaline electrochemical cells exhibit a very high capacity after substantial periods of storage. In fact, even after five years, cell capacities of greater than 90% have been observed for alkaline manganese dioxide electrochemical cells comprised of traditional highly porous, non-woven separators. In light of the theoretical and observed increases in the internal cell resistance of primary alkaline electrochemical cells having solulizable cathodes and which contain barrier-type separators, it is a well established practice to avoid the use of barrier-type separators in primary alkaline electrochemical cells which do not contain solulizable cathodic material.

Both experimental and theoretical evidence suggests that ion migration decreases with decreasing temperature. This decrease in ion migration in a cell containing a separator of any type causes an increase in the internal resistance of the cell. Consequently, it has long been hypothesized that an increase in separator permeability would offset the decrease in ionic migration at low temperatures, and such conventional wisdom has directed those skilled in the primary alkaline electrochemical cell art to maintain or even increase the permeability of the separator when the cell is to be used in low temperature applications.

The separator systems employed in all primary alkaline electrochemical cell systems -- both those containing solulizable cathodic materials and those containing insoluble cathodes -- are often the cause of processing problems which arise during the assembly of the cell. When soluble cathodic materials are used, the separator, though extremely thin must be hard and impervious. Such materials can often break or splinter during the cutting and fabrication processes of cell assembly. The separator materials used in primary alkaline cells having insoluble cathodic materials are soft and fibrous and can cause machinery to jam. Also, the absorbency of the separator material can cause materials handling problems in some cell assembly operations.

## OBJECTS OF THE INVENTION

One object of our invention is to provide for an alkaline electrochemical cell containing cathodic materials insoluble in alkaline electrolyte which exhibits increased cell performance at low temperatures.

Another object of our invention is to provide for a primary alkaline electrochemical cell containing insoluble cathodic materials which accomplishes the above-identified objects, yet does not exacerbate handling and processing problems during cell construction.

Still another object of our invention is to provide for a battery which contains one or more primary alkaline electrochemical cells which meet the foregoing objects of our invention.

These objects, together with other and further objects of our invention which appear from the following description, are accomplished by our invention of the primary alkaline electrochemical cells described herein.

## SUMMARY OF THE INVENTION

We have discovered contrary to the teachings of the prior art and the widely held customary wisdom of those familiar with primary alkaline electrochemical battery systems, that under low temperature discharge conditions, primary alkaline electrochemical cells which contain cathodes which are not soluble in alkaline electrolyte show substantial increases in overall performance when constructed to include a barrier-type separator placed between two conventional porous separators. The barrier-type separators included within the separator systems of our invention are similar or identical to those typically used in primary alkaline electrochemical cells comprised of solulizable cathodic materials.

In general, our invention contemplates the use of a composite, three-layer separator system in primary alkaline electrochemical cells which contain cathodic materials which are insoluble in alkaline electrolyte, e.g., alkaline manganese dioxide cells. The outer layers of the separator system comprise materials conventionally used in alkaline cells with insoluble cathodes, such as non-woven PVA or a web mat comprised of a thick blend of rayon and thermoplastic fibers. The middle layer of the separator system, comprises a barrier type separator material, heretofore used in primary alkaline battery systems having solulizable cathodic materials, but not in primary alkaline cells having insoluble cathodic materials. The barrier-type separator material forming the middle layer of the three layer separator system of our invention can itself be a composite material, e.g., a grafted polyethylene and one or more layers of cellophane.

## BRIEF DESCRIPTION OF THE DRAWING

The accompanying drawing forms a part of our instant specification and is to be read in conjunction therewith:

FIG. 1 illustrates an alkaline manganese dioxide battery of our invention consisting of two cells connected in series.

FIG. 2 is the typical battery discharge curve for a battery of our invention.

## DESCRIPTION OF A PREFERRED EMBODIMENT

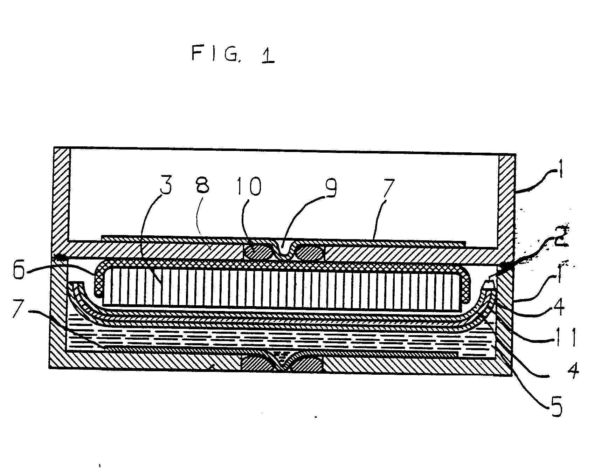

Our invention comprises one or more alkaline manganese dioxide electrochemical cells. The battery shown in FIG. 1, is comprised of two cells connected in series. Each cell is comprised of plastic cups 1, which form the cell walls. The cells can be mechanically connected according to well known industrial methods, including, for instance, ultrasonic welding, gluing by dipping, hot welding or high frequency welding.

The lowermost cell in FIG. 1 is illustrative of a completely assembled cell of the present invention, which contains a pressed cathode 3 consisting essentially of manganese dioxide and an anode 5 comprised of powdered zinc in alkaline electrolyte. The separator assembly 2 comprises two outer layers 4 of porous, non-woven material, of the type commonly used for that purpose in the construction of alkaline electrochemical cells containing cathode material insoluble in alkaline electrolyte. The middle layer 11 of the separator assembly is comprised of a barrier-type separator material commonly used in alkaline electrochemical cells containing solulizable cathodic materials.

The terminal plate 7 of the uppermost cell and terminal plate 6 of the lowermost cell are connected through an aperture in the middle of the bottom 8 of the uppermost cup, the terminal plate 7 comprising an embossed, projected knob 9 extending through the aperture in the bottom of the cup, and furthermore being spot welded to the middle of terminal plate 6. A sealing ring 10 which surrounds the knob 9 on the terminal plate 7 can also be provided.

The outer layers of the separator assembly are standard separator material used in alkaline manganese dioxide electrochemical cells. To determine the materials to be used as the outer layers of the separator system of our invention, various, often-used alkaline manganese dioxide separators were tested. The material for the outer layers of our separator system must be porous and both absorbent of and resistant to alkaline electrolyte. The absorbency of alkaline is important since when the outer layers of separator system are saturated with electrolyte the cell observes less of a restriction to the free flow of ion through the electrolyte, the more alkaline which can be absorbed by such separators, the lower the overall cell resistance. The chemical resistance to alkaline electrolyte is important, since to be usable in cells of our invention, the outer layers of our separator system must withstand hydrolytic attack so as to not degrade over the proposed life of the cell, which can be more than five (5) years.

Moreover, while absorbency and resistance to alkaline electrolyte are important properties for the material to be used in the outer layers of our separator system, the ease of handling during cell assembly is also an important consideration. Table I gives the properties of some of the absorbent separator materials tested.

## TABLE I: PROPERTIES OF ELECTROLYTE ABSORBENT SEPARATOR MATERIALS

| MATERIAL (TRADENAME) | DESCRIPTION | THICKNESS OF SEPARATOR[1] | ELECTROLYTE SOAK-UP[2] | MECHANICAL ASSEMBLY[3] (PLACEMENT) |
|---|---|---|---|---|
| Chicopee WF-1324 | 7.5 mils thick, 100% PVA non-woven fiber with air permeability of 45 ft$^3$/min.ft$^2$ (13,5m$^3$/min . m$^2$) | (192 µm) 15.0 mils (385 µm) | Poor | Poor |
| Chicopee WF-1325 | 4.8 mils thick, 100% PVA non-woven fiber with air permeability of 56 ft$^3$/min.ft$^2$ (16,8m$^3$/min . m$^2$) | (123 µm) 14.4 mils (370 µm) | Poor | Fair |
| Chicopee WF-1335 | 4.6 mils thick, 100% PVA non-woven fiber with air permeability of 167 ft$^3$/min.ft$^2$ (50,1m$^3$/min . m$^2$) | (118 µm) 13.8 mils (353 µm) | Poor | Poor |
| Dexter 2737 | a 6.3 mils thick blend of rayon and thermoplastic fibers combined in a web with KOH absorbency of 62.0 | (161 µm) 18.9 mils (484 µm) | Good | Good |
| Dexter 1235 | a 9.5 mils thick blend of rayon and thermoplastic fibers combined in a web with a KOH absorbency of 66.0 | (243 µm) 19.0 mils (486 µm) | Fair | Fair |

[1] As used in each of the outer layers of the separator system.

[2] Electrolyte soak-up properties are rated as follows (initial paper weight v. total saturation weight in 40% KOH on a standard 1" square of material):

Good 240% or more equivalent weight retention
Fair 180-239% equivalent weight retention
Poor 120-179% equivalent weight retention.

[3] Placement properties are determined by the number of processing problems encountered (e.g., machine jams and faulty folds).

NOTE: KOH absorbency according to Dexter Corp. Method 26-4/77.

While both of the materials manufactured by Dexter Corporation are considered to be within the scope of our invention, we preferred the Dexter 2737, based upon its somewhat better electrolyte soak-up and the ease in handling during cell assembly. A more complete listing of the important physical properties of Dexter 2737 are given in Table II.

TABLE II

| PROPERTIES OF DEXTER 2737 | | | |
|---|---|---|---|
| | Min. | Avg. | Max |
| Grammage (Basis Weight): g/m² TAPPI T-410 OM-83 | 36.0 | 41.0 | 46.0 |
| Thickness (per sheet): mils (μm) | 5.1(130) | 6.3(161) | 7.5(192) |
| Absorbency (KOH) mm Dexter Method 102-4/81 | 44.5 | 62.0 | |
| Stiffness, Gurley: mg Dexter Method 51-11/67 | | 12.0 | |
| pH: TAPPI T-509 OM-83 (Cold Extraction) | 4.7 | 5.2 | 5.7 |

The middle, barrier-type layer of the separator assembly is an essentially non-microporous membrane, having a pore size of approximately 25 to 40 angstrom (2,5 to 4,0 nm). Similar materials are frequently used as barrier-type separators in primary alkaline electrochemical cells having solulizable cathodic materials. In selecting the middle, barrier-type layer of the separator assembly, it is important to choose a material which allows for the transfer of electrolyte ions and water. Similarly, the barrier-type spearator material must be resistant to alkaline electrolyte. In choosing the barrier-type material for inclusion in our separator assembly, we were also concerned with whether the material could be handled easily during fabrication and cell assembly.

For inclusion in our separator system six often- used barrier-type separators were selected for testing. The properties of these grafted polyolefins barrier-type membranes, all of which are resistant to alkaline electrolyte and effectively non-porous, are given in Table III.

TABLE III: PROPERTIES OF
BARRIER-TYPE SEPARATOR MATERIALS

| MATERIAL (TRADENAME) | DESCRIPTION[1] | DEGREE OF CROSS-LINK | MECHANICAL ASSEMBLY (PLACEMENT[2] | PROCESSING[3]) |
|---|---|---|---|---|
| Permion P7192 | Grafted, low cross linked PE + 2 layers cellophane | Low | Poor | Good |
| Permion P2192 | Grafted, high cross linked PE + 2 layers cellophane | High | Poor | Fair |
| Permion E6001 | Emulsified, grafted, non-cross linked PP | Low | Poor | Poor |
| Zamm 0 | Grafted, non-cross linked PE | None | Good | Fair |
| Zamm 1 | Grafted, non-cross linked PE + one layer of cellophane | None | Good | Fair |
| Zamm 2 | Grafted, non-cross linked PE + 2 layers of cellophane | None | Good | Good |

[1] Graft is a water-based acrylic or solvent-based methacrylic acid.

[2] Placement properties are determined by the number of mechanical processing problems encountered (e.g., machine jams and faulty folds).

[3] Processing properties are rated as follows:
Good 0-2 flawed edges per 2.5" cut ( 6,4 cm cut)
Fair 3-6 flawed edges per 2.5" cut ( 6,4 cm cut)
Poor 6 or more flawed edges per 2.5" cut. (6,4 cm cut)

Since all of the materials disclosed in Table VI are resistant to alkaline electrolyte and are generally used as barrier-type separators in primary alkaline electrochemical systems having solulizable cathodes, all of the materials in Table VI are within the generalized scope of the invention. However, since the Zamm 2 material ranked the best in terms of handling and fabrication, it is the material which is preferred when constructing alkaline manganese dioxide cells in the "flat" construction such as described herein in FIG. 1. A more complete listing of the properties of Zamm 2, which is manufactured by RAI Research Corp. and which comprises grafted, non-cross linked polyethylene and two layers of cellophane, are given in Table IV.

TABLE IV

| PROPERTIES OF ZAMM 2 | |
|---|---|
| Thickness (mils) | 3.0 (75 μm) |
| Dry Tensile Strength (psi) | > 1,000 (7 MPa) |
| Electrolyte Resitance (m /in²) | 21-39 (3,2-5,95m/cm²) |

Batteries made in accordance with a preferred embodiment to our invention, i.e., with a separator

7

assembly comprised of Zamm-2 between layers of Dexter 2737, did not show any measurable decrease in performance from prior art alkaline manganese dioxide cells constructed without the three layer separator assembly of our invention. Some specifications for batteries constructed according to our invention in the "flat" configuration as shown in FIG. 1 are as follows:

| Nominal Voltage: | 4.5 volts |
| Nominal Capacity: | 1150 mAh 3,000 ohm continuous discharge to 2.7 volts at 21° C (70° F) |
| Storage Loss: | Less than 5% per year at 25° C |

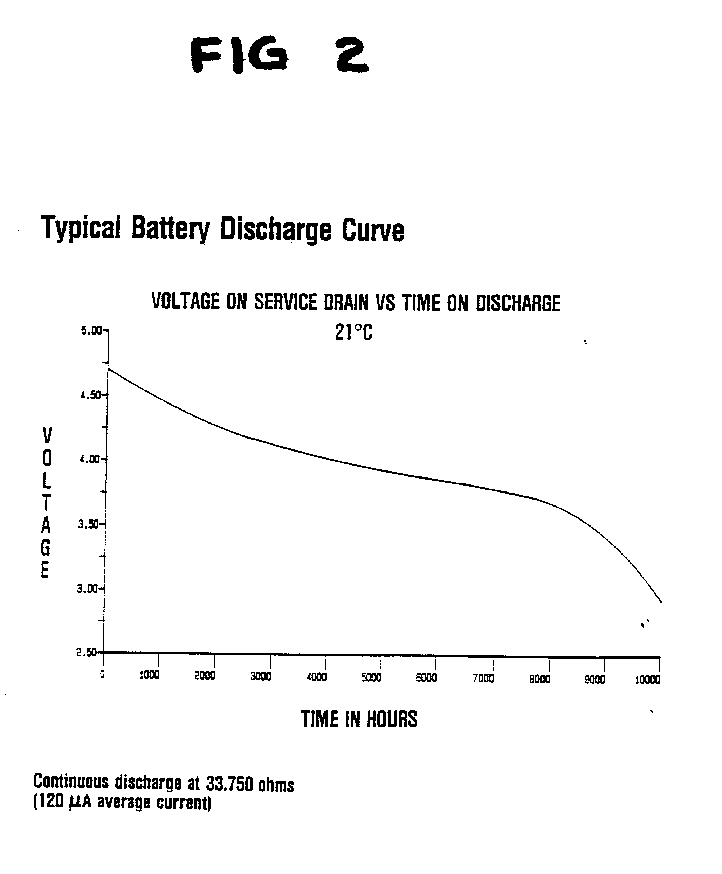

The typical battery discharge curve, i.e., voltage on service drain verses time on discharge, of batteries constructed according to our invention when discharged continuously at 33.75 ohms at 21° C is depicted in FIG. 2.

In order to test cells of our invention against prior art cells at low temperatures, ten alkaline manganese dioxide batteries were constructed. Five of the batteries were constructed according to our invention and five were constructed according to the prior art, i.e., without the middle, barrier-type separator layer of our invention. The results of these test are given below.

TEST 1:

After construction, the batteries were stored at 25° C. Then, batteries were discharged (continuous discharge at 2350 ohms) at -10° C to less than three volts. The time required to reach various end-point voltages are given in Table V.

TABLE V

| EFFECT OF BARRIER ON CELL PERFORMANCE (2-MONTH STORAGE -- DISCHARGE AT -10° C) | | |
| --- | --- | --- |
| End Voltage | Discharge Time (Hours) | |
| | With Barrier | Without Barrier |
| 4.0 | 103 | 105 |
| 3.6 | 395 | 354 |
| 3.4 | 484 | 368 |
| 3.2 | 591 | 374 |
| 3.0 | 627 | 379 |

As shown in Table V, the service life of cells of our invention, i.e., an end point voltage of 3.0, is almost 75% greater than with cells of the prior art construction. This result is unexpected in light of the perceived increase in internal cell resistance due to the incorporation of an essentially non-porous separator layer in alkaline manganese dioxide electrochemical cells. according to the prior art, i.e., without the middle, barrier-type separator layer of our invention. The results of these test are given below.

TEST 1:

After construction, the batteries were stored at 25° C. Then, batteries were discharged (continuous discharge at 2350 ohms) at -10° C to less than three volts. The time required to reach various end-point voltages are given in Table V.

EP 0 345 465 A1

TABLE V

| EFFECT OF BARRIER ON CELL PERFORMANCE (2-MONTH STORAGE -- DISCHARGE AT -10°C) | | |
|---|---|---|
| End Voltage | Discharge Time (Hours) | |
| | With Barrier | Without Barrier |
| 4.0 | 103 | 105 |
| 3.6 | 395 | 354 |
| 3.4 | 484 | 368 |
| 3.2 | 591 | 374 |
| 3.0 | 627 | 379 |

As shown in Table V, the service life of cells of our invention, i.e., an end point voltage of 3.0, is almost 75% greater than with cells of the prior art construction. This result is unexpected in light of the perceived increase in internal cell resistance due to the incorporation of an essentially non-porous separator layer in alkaline manganese dioxide electrochemical cells.

TEST 2:

The cells of Test 1 were then stored for an additional one hundred fifty-two (152) days, after which the OCV was determined at 25°C. The OCV for each battery, as determined in Test 2, is given in Table VI.

TABLE VI

| OCV AFTER DISCHARGE (STORAGE 152 DAYS) | | |
|---|---|---|
| Sample No. | With Barrier | Without Barrier |
| 1 | 3.53 | 0.92 |
| 2 | 3.52 | 1.22 |
| 3 | 3.52 | 0.18 |
| 4 | 3.53 | 1.34 |
| 5 | 3.62 | 0.50 |
| Average | 3.54 | 0.83 |

As shown in Table VI, the prior art batteries, i.e., the batteries without a barrier-type membrane as part of the separator system, apparently shorted out after discharge even though the amount of discharge was significantly less than batteries of our invention.

The principles, preferred embodiment and mode of operation of our invention has been described in the foregoing specification. The invention which is intended to be protected herein should not, however, be construed as limited to the particular forms described as these are to be regarded as illustrative rather than restrictive and variations and changes may be made by those skilled in the art without departing from the spirit of the invention. In particular, our invention is not limited to the exact materials set forth in the preferred embodiment and is not limited to alkaline manganese dioxide batteries of a given construction. Accordingly, the foregoing detailed description should be considered exemplary in nature and not as limiting to the scope and spirit of the invention as set forth in the appended claims.

9

## Claims

1. A primary alkaline electrochemical cell adapted for use at low temperatures which comprises a powdered metallic anode having an aqueous alkaline electrolyte dispersed therein, a cathode which is insoluble in said aqueous alkaline electrolyte and a separator placed there between, wherein said separator forms an alkaline resistant non porous barrier between said anode and said cathode.

2. The primary alkaline electrochemical cell of Claim 1, wherein said powdered metallic anode is zinc.

3. The primary alkaline electrochemical cell of Claim 1, wherein said cathode consists essentially of manganese dioxide.

4. The primary alkaline electrochemical cell of Claim 1, wherein said electrolyte is an aqueous solution of potassium hydroxide.

5. The primary alkaline electrochemical cell of Claim 1, wherein said separator comprises two layers of an absorbent porous separator material and a barrier type membrane placed therebetween.

6. The alkaline electrochemical cell of Claim 5, wherein said barrier-type membrane has a pore size of approximately 25 to 40 angstroms (2,5 to 4,0 nm) and allows for the transfer of electrolytic ions.

7. The alkaline electrochemical cell of Claim 5, wherein said barrier-type membrane is a grafted, non-cross linked polyethylene.

8. The alkaline electrochemical cell of Claim 7, wherein said barrier-type membrane further comprises one or more layers of cellophane.

9. The alkaline electrochemical cell of Claim 5, wherein said absorbent separator material absorbs at least 180% of its weight of said alkaline electrolyte.

10. A primary alkaline electrochemical battery comprised of one or more cells, wherein each cell comprises a powered metallic anode having an aqueous alkaline electrolyte dispersed therein, a cathode which is insoluble in said aqueous alkaline electrolyte and a non-porous separator placed therein between, said battery having increased performance as compared to a battery having cells comprised of a porous separator when discharged at temperatures below 0° C.

11. A primary alkaline electrochemical battery comprised of one or more cells, wherein each cell comprises a powered metallic anode having an aqueous alkaline electrolyte dispersed therein, a cathode which is insoluble in said aqueous alkaline electrolyte and a non-porous separator placed therein between, said battery having increased performance as compared to a battery having cells comprised of a porous separator at very light drains and low temperatures.

FIG. 1

# FIG 2

## Typical Battery Discharge Curve

### VOLTAGE ON SERVICE DRAIN VS TIME ON DISCHARGE
### 21°C

Continuous discharge at 33.750 ohms
(120 µA average current)

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A-2 389 242 (LECLANCHE S.A.) <br> * Page 1, lines 1-5; page 2, lines 33-36; page 5, lines 4-19 * | 1-3,5,7 ,8 | H 01 M 2/16 <br> H 01 M 6/06 |
| Y | | 6,10,11 | |
| Y | PATENT ABSTRACTS OF JAPAN, vol. 6, no. 64 (E-103)[942], 23rd April 1982; & JP-A-57 7061 (HITACHI MAXELL K.K.) 14-01-1982 <br> * Abstract * | 10,11 | |
| Y | US-A-4 192 908 (A. HIMY et al.) <br> * Column 4, line 6 * | 6 | |
| X | GB-A- 851 202 (UNION CARBIDE CORP.) <br> * Page 2, lines 74-83; claims 1,5,8,9 * | 1-3,5 | |
| X | FR-A-2 488 051 (CELANESE CORP.) <br> * Page 48, lines 12,18; claims 1,8 * | 1-3,5 | |
| X | PATENT ABSTRACTS OF JAPAN, vol. 11, no. 288 (E-542)[2735], 17th September 1987; & JP-A-62 88 256 (MATSUSHITA ELECTRIC IND. CO., LTD) 22-04-1987 <br> * Abstract * | 1-3,6,7 | TECHNICAL FIELDS SEARCHED (Int. Cl.4) <br><br> H 01 M |
| X | PATENT ABSTRACTS OF JAPAN, vol. 7, no. 17 (E-154)[1162], 22nd January 1983; & JP-A-57 174 858 (MATSUSHITA DENKI SANGYO K.K.) 27-10-1982 <br> * Abstract * | 1-3,5 | |
| X | US-A-3 894 889 (L.M. GILLMAN et al.) <br> * Column 1, line 11; column 2, line 57; column 4, line 20; claim 1 * <br> ---       -/- | 1-6 | |

The present search report has been drawn up for all claims

| Place of search | Date of completion of the search | Examiner |
|---|---|---|
| THE HAGUE | 05-07-1989 | CZECH B.P. |

European Patent
Office

EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | GB-A-2 028 567 (P.R. MALLORY & CO.) <br> * Page 4, line 16; claim 1 * | 1-3,5-7 ,9 | |
| X | GB-A-1 489 538 (ESB INC.) <br> * Page 5, lines 53-59; claim 1 * | 1-4 | |
| X | FR-A-2 283 555 (SAFT) <br> * Page 6, line 34; claim 1 * | 1-3 | |
| X | FR-A-2 384 357 (C.G.E.) <br> * Page 2, lines 1-5,39; claims 1,5,6 * | 1-4 | |
| X | DE-A-2 212 581 (ESB INC.) <br> * Claims 1,3,4,7; page 5, lines 8-9 * | 1-4 | |
| A | PATENT ABSTRACTS OF JAPAN, vol. 6, no. 64 (E-103)[942], 23rd April 1982; & JP-A-57 5267 (TOSHIBA RAY-O-VAC K.K.) 12-01-1982 | 1,7,8 | |
| A | CHEMICAL ABSTRACTS, vol. 91, no. 10, September 1979, page 141, abstract no. 76877r, Columbus, Ohio, US; & JP-A-79 50 829 (RAY-O-VAC CO., (JAPAN) LTD) 21-04-1979 | 1-3,6-8 | TECHNICAL FIELDS SEARCHED (Int. Cl.4) |
| A | CHEMICAL ABSTRACTS, vol. 86, 1977, page 170, abstract no. 158277f, Columbus, Ohio, US; D. AGOSTINO et al.: "Low temperature alkaline battery separators", & POWER SOURCES SYMP., PROC. 1976, 27, 89-91 | 1,7,10, 11 | |
| A | PATENT ABSTRACTS OF JAPAN, vol. 6, no. 52 (E-100)[930], 7th April 1982; & JP-A-56 165 273 (MATSUSHITA DENKI SANGYO K.K.) 18-12-1981 | 1,7 | |

The present search report has been drawn up for all claims

| Place of search | Date of completion of the search | Examiner |
|---|---|---|
| THE HAGUE | 05-07-1989 | CZECH B.P. |